# EUROPÄISCHE PATENTSCHRIFT

(11) **EP 2 165 459 B1**
(45) Veröffentlichungstag und Bekanntmachung des Hinweises auf die Patenterteilung: **23.03.2016**
(21) Anmeldenummer: 08758682.2
(22) Anmeldetag: 21.05.2008
(51) Int. Cl.: H04L 12/22, H04W 12/02

(54) **VORRICHTUNG UND VERFAHREN ZUR VERARBEITUNG VON DATENSTRÖMEN**
DEVICE AND METHOD FOR PROCESSING DATA FLOWS
DISPOSITIF ET PROCÉDÉ DE TRAITEMENT DE FLUX DE DONNÉES

(30) Priorität: 11.06.2007 DE 102007026886; 26.09.2007 DE 102007046023; 17.12.2007 DE 102007060675
(43) Veröffentlichungstag der Anmeldung: 24.03.2010
(73) Patentinhaber: Rohde & Schwarz GmbH & Co. KG, 81671 München (DE)
(72) Erfinder: BUCHIN, Boyd, 83098 Brannenburg (DE); VOLL, Ingo, 14641 Wustermark (DE); SÖRGEL, Dieter, 15345 Altlandsberg (DE)
(74) Vertreter: Körfer, Thomas
(86) Internationale Anmeldenummer: PCT/EP2008/004077
(87) Internationale Veröffentlichungsnummer: WO 2008/151710

(56) Entgegenhaltungen:
- US-A1- 2004 044 902
- US-A1- 2004 052 372
- US-A1- 2005 198 412

## Beschreibung

Die Erfindung bezieht sich auf eine Vorrichtung und auf ein Verfahren zur Verarbeitung von Datenströmen in einer Kommunikationseinheit.

Aus der DE 10 2005 050 174 A1 ist ein Kommunikationsnetz bekannt, welches über integrierte zentrale Vorrichtungen verfügt, wobei aus sicherheitsrelevanten Gründen ein Teil der geräteinternen Datenverarbeitung mit verschlüsselten Daten und auch mit verschlüsselten Dienstgütedaten erfolgt.

Von Nachteil an diesem Kommunikationsnetz ist, dass die darin vorhandene Infrastruktur lediglich einen einzigen definierten Standard erfüllt und die teilnehmenden Geräte herkömmliche 1-Liniengeräte sind, welche nur ein einziges Funkverfahren beherrschen.

In der US 2004/052372 A1 werden nur Prüfungsregeln für einen konfigurierbaren Datenaustausch in einer zusätzlichen Verschaltungseinheit implementiert.

Aus der US 2004/044902 A1 und der US 2005/198412 A1 sind zwar Verschlüsselungsmodule bekannt, die Prüfungsregeln für einen konfigurierbaren Datenaustausch zwischen Datenströmen implementieren. Diese sind jedoch nicht für die Prüfungsregeln aus der US 2004/052372 A1 geeignet, weil dies eine wesentliche Änderung der Steuerstruktur der Vorrichtung, insbesondere des Switch-Policy-Controllers und des Red-Switch, erfordern würde.

Der Erfindung liegt die Aufgabe zu Grunde, eine Vorrichtung und ein Verfahren anzugeben, womit gleichzeitig mehrere unterschiedliche Infrastrukturen in einem Gerät zur verschlüsselten Datenkommunikation realisiert sind und ein Teilnehmer mehrere Linien bzw. Funkverfahren gleichzeitig oder abwechselnd benutzen kann.

Bezüglich der Vorrichtung wird die genannte Aufgabe erfindungsgemäß gelöst durch die Merkmale des Anspruchs 1. Die Merkmale des Anspruchs 18 lösen die genannte Aufgabe im Hinblick auf das erfindungsgemäße Verfahren.

Vorteilhafte Weiterbildungen sind Gegenstand der auf Anspruch 1 bzw. Anspruch 18 rückbezogen Unteransprüche.

So umfasst die erfindungsgemäße Vorrichtung zur Verarbeitung von Datenströmen eine Kommunikationseinheit mit zwei voneinander getrennten Datenverarbeitungsbereichen, die über zumindest zwei getrennte Nachrichtenpfade miteinander verbunden sind, wobei die Nachrichtenpfade jeweils einen Nachrichtensender und jeweils einen Nachrichtenempfänger aufweisen. In jedem Nachrichtenpfad ist jeweils ein Verschlüsselungsmodul vorgesehen, welches sowohl mit einem ersten Datenverarbeitungsbereich als auch mit einem zweiten Datenverarbeitungsbereich verbunden ist. Ferner ist im zweiten Datenverarbeitungsbereich eine Verschaltungseinheit vorgesehen, welche mit den Nachrichtenpfaden des ersten Datenverarbeitungsbereichs sowie mit allen Verschlüsselungsmodulen der entsprechenden Nachrichtenpfade zur gezielten Verteilung von bestimmten Nachrichten verbunden ist.

Die mit der Erfindung erzielten Vorteile bestehen insbesondere darin, dass die erfindungsgemäße Vorrichtung in ihrer Kommunikationseinheit mehrere Nachrichtenpfade bzw. Funklinien aufweist. Dadurch ist die erfindungsgemäße Vorrichtung als Netzübergang zwischen mindestens zwei unterschiedlich konzipierten Netzen einsetzbar.

Vorteilhafterweise sind zwei voneinander getrennte Datenverarbeitungsbereiche vorgesehen, wobei im ersten Datenverarbeitungsbereich sensitive Daten und im zweiten Datenverarbeitungsbereich nicht-sensitive Daten verarbeitet werden. Dadurch ist sichergestellt, dass sensitive und nicht-sensitive Daten stets getrennt sind und nicht vermischt werden können.

Vorteilhafterweise ist dadurch der Aufwand bei der Installation von mehreren als Netzübergang (Gateway) vorgesehene Hardware-Einheiten für eine Netzinfrastruktur reduziert, da mit der Verwendung der erfindungsgemäßen Vorrichtung lediglich eine einzige Hardware-Einheit als Netzübergang bzw. Gateway in mehrere anzubindende Netze betrieben werden muss.

Des Weiteren ist es von Vorteil, wenn die erfindungsgemäße Vorrichtung auch als Endgerät für den Netzteilnehmer konzipiert ist. Die erfindungsgemäße Vorrichtung sieht vorteilhafterweise als Kommunikationseinheit ein SDR Funkgerät (Software Defined Radio, i.e. Funkgerät auf Softwarebasis) vor, in welchem über eine Software mehrere (Funk)Linien realisiert sind, so dass dieses Funkgerät den jeweiligen Standards der Netzplanung flexibel angepasst werden kann. Durch die erfindungsgemäße Vorrichtung können somit vorteilhafterweise mehrere herkömmliche Funkgeräte ersetzt werden.

Ferner ist es von Vorteil, wenn in der erfindungsgemäßen Vorrichtung die Internet Protokoll (IP) Technologie implementiert ist, wodurch größere und inhomogene Netzbereiche miteinander verbunden bzw. vernetzt werden können.

Zudem ist es vorteilhaft, wenn die erfindungsgemäße Vorrichtung eine Kommunikationseinheit aufweist, welche mehrere Funklinien bzw. Nachrichtenpfade aufweist, welche gemäß vorher definierten Regeln miteinander vernetzbar sind. Dadurch wird zwischen verschiedenen Netzen, wie beispielsweise einem IP-basiertem Netz und einem Netz für einen Behördenfunk mittels der erfindungsgemäßen Vorrichtung bzw. des erfindungsgemäßen Verfahrens eine Routerfunktion bereitgestellt, wobei gemäß den Vorteilen der vorliegenden Erfindung die Informationssicherheit stets gewährleistet ist.

Außerdem ist es vorteilhaft, wenn die Kommunikationseinheit der erfindungsgemäßen Vorrichtung mittels des in ihr integrierten Verschlüsselungsmoduls eine interne Verschlüsselungsfähigkeit aufweist. Dadurch ist die Informationssicherheit von Daten mit hoher Vertraulichkeit (sensitive Daten) bei einer Übertragung über öffentlich zugängliche Netze sichergestellt.

Darüber hinaus ist es von Vorteil, dass Daten unterschiedlicher Domänen wie beispielsweise Daten von verschiedenen Abteilungen einer Firma und Daten unterschiedlicher Klassifikation im Hinblick auf ihre Vertraulichkeit auf einer einzigen Plattform bzw. innerhalb der erfindungsgemäßen Vorrichtung, so verarbeitet werden können, dass vertrauliche Daten innerhalb eines vorher definierten Bereichs gehalten werden. Insbesondere ist es von Vorteil, dass vertrauliche Daten (sensitive Daten) im unverschlüsselten Zustand streng getrennt sind von weniger vertraulichen Daten.

Gemäß einer vorteilhaften Ausgestaltung der erfindungsgemäßen Vorrichtung sind in jedem Verschlüsselungsmodul Prüfregeln für einen Datenaustausch zwischen den verschiedenen Nachrichtenpfaden bzw. Funklinien des zweiten Datenverarbeitungsbereichs vorgesehen, wobei die Nachrichtenpfade bzw. die Funklinien innerhalb der Kommunikationseinheit vorteilhafterweise unterschiedliche und/oder gleiche Kommunikationsstandards erfüllen.

Zweckmäßigerweise ist die Verschaltungseinheit der erfindungsgemäßen Vorrichtung mit einer Konfigurationseinheit verbunden. Mittels dieser Konfigurationseinheit sind die Prüfregeln und/oder die Schlüssel selektiv in den einzelnen Verschlüsselungsmodulen konfigurierbar, indem an die Konfigurationseinheit ein Speicherelement, insbesondere ein USB-Stecker anschließbar ist, der die gewünschten Konfigurations-Daten enthält.

Gemäß einer vorteilhaften Weiterbildung der erfindungsgemäßen Vorrichtung ist für eine Teilmenge der in der Kommunikationseinheit vorgesehenen Nachrichtenpfade ein bidirektionaler Betrieb vorgesehen. Für zumindest eine Teilmenge der Nachrichtenpfade kann ein unidirektionaler Betrieb vorgesehen sein, was zusätzlich die Informationssicherheit bestimmter Daten erhöht, da beispielsweise diese nicht übertragen werden können, da für diese Art von Daten nur ein Empfangspfad vorgesehen ist.

Das erfindungsgemäße Verfahren bezieht sich darauf, dass Datenströme in zwei voneinander getrennten Datenverarbeitungsbereichen verarbeitet werden, wobei die Datenströme in zumindest zwei getrennten Nachrichtenpfaden zwischen jeweils einem Nachrichtensender und jeweils einem Nachrichtenempfänger transportiert werden und von jeweils einem Verschlüsselungsmodul in dem entsprechenden Nachrichtenpfad verschlüsselt bzw. entschlüsselt werden. Jedes Verschlüsselungsmodul ist mit einer Verschaltungseinheit innerhalb des zweiten Datenverarbeitungsbereichs verbunden, welche bestimmte Nachrichten eines Datenstroms gezielt auf verschiedene Nachrichtenpfade innerhalb des ersten Datenverarbeitungsbereichs sowie des zweiten Datenverarbeitungsbereichs verteilt.

Gemäß einer vorteilhaften Weiterbildung des erfindungsgemäßen Verfahrens werden in jedem Verschlüsselungsmodul Prüfregeln für einen konfigurierbaren Datenaustausch zwischen den verschiedenen Nachrichtenpfaden des ersten Datenverarbeitungsbereichs implementiert. Dadurch wird verhindert, dass aus diesem Datenverarbeitungsbereich sensitive Daten unkontrolliert abfließen.

Ein weiterer Vorteil des erfindungsgemäßen Verfahrens besteht darin, dass in jedem Verschlüsselungsmodul Prüfregeln für einen konfigurierbaren Datenaustausch zwischen einem sensitiven Datenstrom und mindestens einem Nachrichtenpfad innerhalb des zweiten Datenverarbeitungsbereichs implementiert werden. Dadurch ist es möglich, dass sensitive Daten aus dem erstem Datenverarbeitungsbereich verschlüsselt werden und somit kontrolliert zur Verteilung auf öffentliche Netze freigegeben werden.

Des weiteren ist es von Vorteil, wenn das erfindungsgemäße Verfahren vorsieht, dass mit den Prüfregeln eingehende und/oder ausgehende Kommunikation zwischen den Nachrichtenpfaden selbstständig bzw. automatisch analysiert und Datenströme anhand ihres Vertraulichkeitsgrads in sensitive und nicht-sensitive Daten unterteilt werden.

Ausführungsbeispiele der vorliegenden Erfindung werden nachfolgend beschrieben. Sowohl die Struktur als auch die Betriebsweise der Erfindung sowie deren weiteren Vorteile und Aufgaben sind am besten anhand der folgenden Beschreibung in Verbindung mit der dazugehörigen Zeichnung verständlich. In der Zeichnung zeigen:
- Fig. 1: ein Einsatzszenario für zwei als Netzübergang vorgesehene Ausführungsbeispiele der erfindungsgemäßen Vorrichtung;
- Fig. 2: das Problem des unkontrollierten Datenabflusses in einem Gerät für einen Netzübergang und
- Fig. 3: ein Ausführungsbeispiel einer erfindungsgemäßen Vorrichtung mit drei Nachrichtenpfaden bzw. Linien, welche das in Fig. 2 dargestellte Problem vermeidet.

Einander entsprechende Teile sind in allen Figuren mit den gleichen Bezugszeichen versehen.

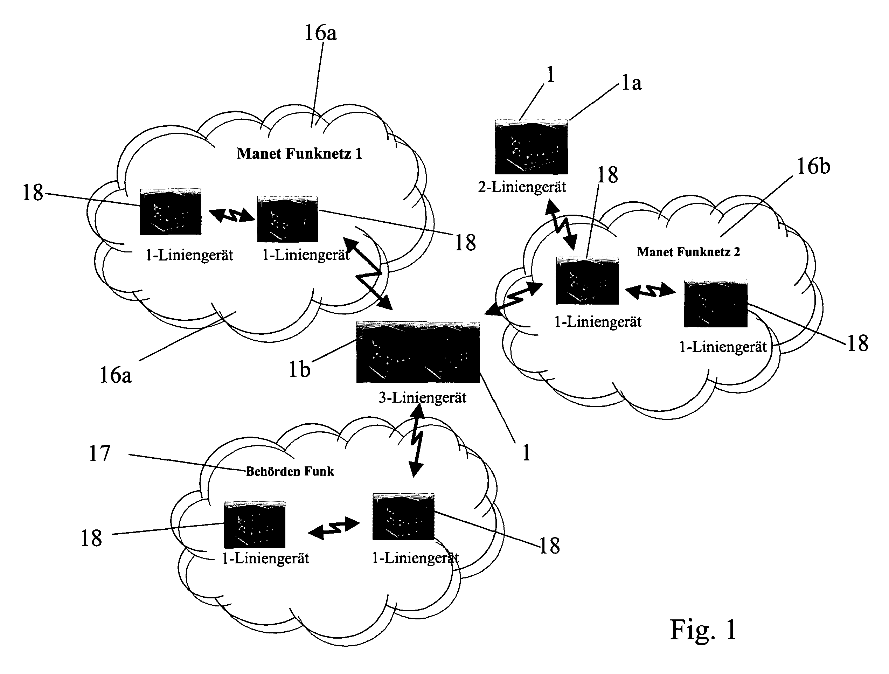

Fig. 1 zeigt ein Einsatzszenario für zwei als Netzübergang (Gateway) vorgesehene Ausführungsbeispiele 1a, 1b der erfindungsgemäßen Vorrichtung 1. In diesem Einsatzszenario sind zwei unterschiedliche Manet Funknetze 16a, 16b (Mobile AdHoc Netze, selbstkonfigurierende Funknetze) über ein erstes Ausführungsbeispiel 1a der erfindungsgemäßen Vorrichtung 1 miteinander verbunden, wobei dieses erste Ausführungsbeispiel 1a ein 2-Liniengerät darstellt, welches zwei unterschiedliche Nachrichtenpfade 5a, 5b, 5c bzw. Linien aufweist. Außerdem zeigt das Einsatzszenario ein Funknetz 17 für Behörden, welches über ein zweites Ausführungsbeispiel 1b mit beiden Manet Funknetzen 16a, 16b verbunden ist, wobei das zweite Ausführungsbeispiel 1b der erfindungsgemäßen Vorrichtung 1 ein 3-Liniengerät mit drei verschiedenen Nachrichtenpfaden 5a, 5b, 5c darstellt. Innerhalb der drei Teilnetze 16a, 16b, 17 des Einsatzszenarios kommunizieren herkömmliche Funkgeräte, welche hier als 1-Liniengerät 18 bezeichnet sind.

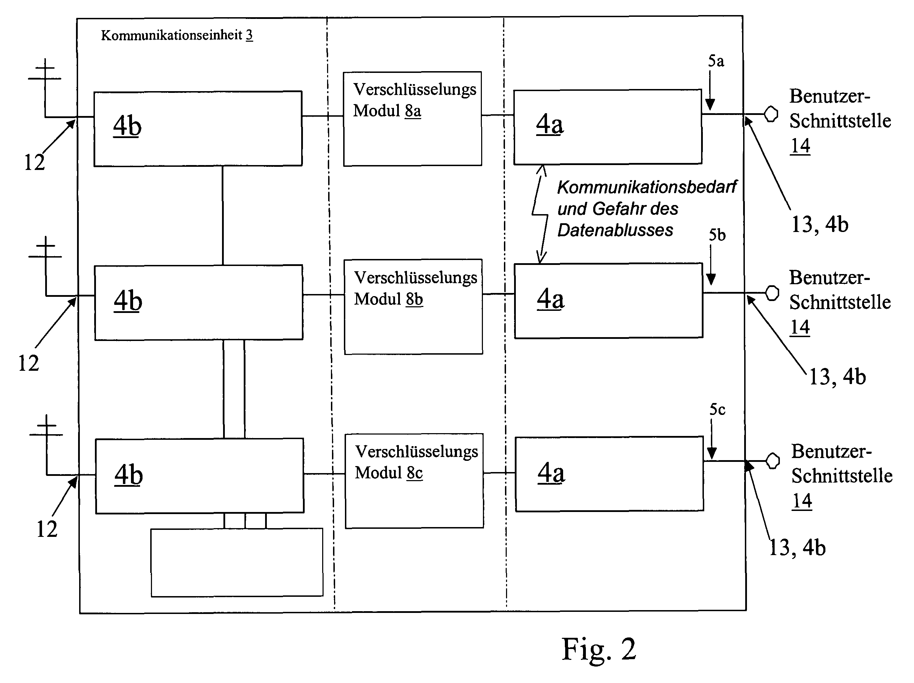

Fig. 2 zeigt das Problem des unkontrollierten Datenabflusses in einem Gerät für einen Netzübergang, wobei dieses Gerät drei Linien bzw. Nachrichtenpfade 5a, 5b, 5c aufweist. In einem offenem Datenverarbeitungsbereich 4a soll verhindert werden, dass Daten, insbesondere sensitive Daten unkontrolliert zwischen den Nachrichtenpfaden 5a und 5b ausgetauscht werden.

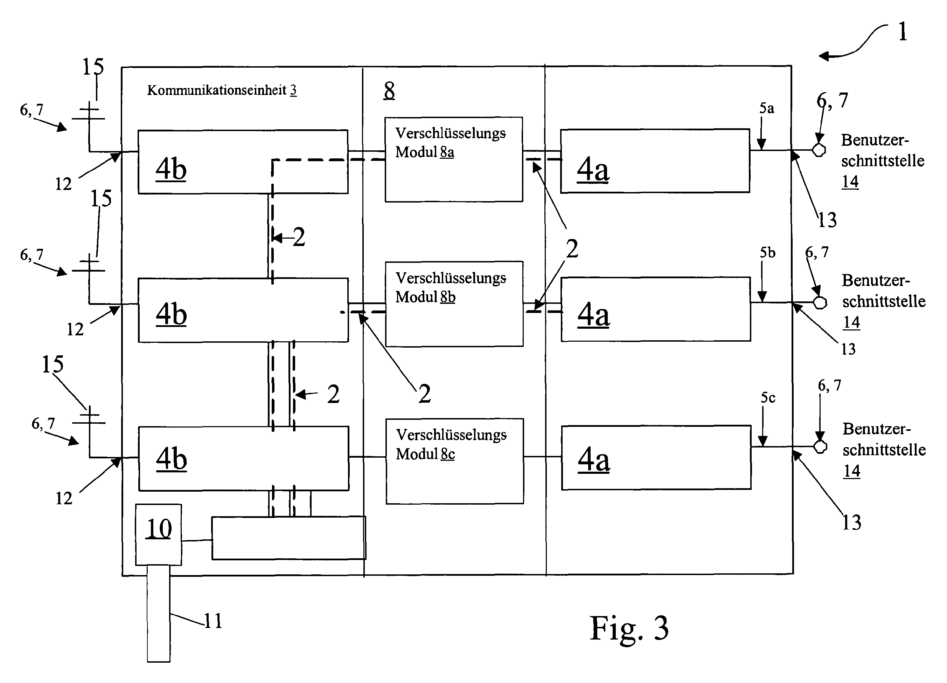

Fig. 3 zeigt das zweite Ausführungsbeispiel 1b der erfindungsgemäßen Vorrichtung 1 mit drei Nachrichtenpfaden 5a, 5b, 5c bzw. Linien, wobei dieses Ausführungsbeispiel das in Fig. 2 dargestellte Problem des unkontrollierten Datenabflusses vermeidet. Die erfindungsgemäße Vorrichtung 1 zur Verarbeitung von Datenströmen 2 in einer Kommunikationseinheit 3 umfasst zwei voneinander getrennte Datenverarbeitungsbereiche 4a, 4b, die mehrere getrennte Nachrichtenpfade 5a, 5b, 5c aufweisen, die mit jeweils einem Nachrichtensender 6 und jeweils einem Nachrichtenempfänger 7 verbunden sind. In jedem Nachrichtenpfad 5a, 5b, 5c ist jeweils ein Verschlüsselungsmodul 8a, 8b, 8c vorgesehen, welches sowohl mit einem ersten Datenverarbeitungsbereich 4a als auch mit einem zweiten Datenverarbeitungsbereich 4b verbunden ist. Ferner ist im zweiten Datenverarbeitungsbereich 4b eine Verschaltungseinheit vorgesehen, welche mit den Nachrichtenpfaden 5a, 5b, 5c des ersten Datenverarbeitungsbereichs 4a sowie mit allen Verschlüsselungsmodulen 8a, 8b, 8c der entsprechenden Nachrichtenpfade 5a, 5b, 5c zur gezielten Verteilung von bestimmten Nachrichten verbunden ist.

Im zweiten Datenverarbeitungsbereich 4b erfolgt die Aufbereitung des Datenstroms 2 für die Übertragung über die Antenne 15. Dazu gehören Verstärker, Modems, Filter und eine Wellenformsteuerung. Die wesentlichen Anforderungen ergeben sich durch das jeweilige Funkverfahren des Nachrichtenpfads 5a, 5b, 5c, wobei in dem zweiten Datenverarbeitungsbereich 4b keine vertraulichen bzw. sensitiven Daten im Klartext, d.h. unverschlüsselt verarbeitet werden.

Das Verschlüsselungsmodul 8 trennt den zweiten Datenverarbeitungsbereich 4b vom erstem Datenverarbeitungsbereich 4a, wobei alle vertraulichen Daten durch kryptographische Methoden, welche in den Verschlüsselungsmodulen 8a, 8b, 8c implementiert sind, geschützt werden.

In der erfindungsgemäßen Vorrichtung 1 besteht Bedarf für den Austausch von Daten zwischen den einzelnen Nachrichtenpfaden 5a, 5b, 5c, wobei der Datenaustausch innerhalb des zweiten Datenverarbeitungsbereichs 4b problemlos über Standardverfahren, wie beispielsweise Netzwerkswitches möglich ist. Dabei ist die Informationssicherheit der Daten wegen ihrer Verschlüsselung gewährleistet.

Die für einen bestimmten Nachrichtenpfad 5a, 5b, 5c vorgesehenen Daten werden nun adressiert und markiert, um im Anschluss daran dem Verschlüsselungsmodul 8a, 8b, 8c übergeben zu werden. Das Verschlüsselungsmodul 8a, 8b, 8c überprüft die Berechtigung des Nachrichtenpfads 5a, 5b, 5c zum Datenaustausch und den Vertraulichkeitsgrad der zu übertragenden Daten. Dann markiert das Verschlüsselungsmodul 8a, 8b, 8c die Daten und übergibt sie zusammen mit der Adresse des empfangenden Nachrichtenpfads 5a, 5b, 5c an den zweiten Datenverarbeitungsbereich 4b.

Die verschlüsselten Daten werden nun über die Verschaltungseinheit dem zweiten Datenverarbeitungsbereich 4b des entsprechenden Nachrichtenpfads 5a, 5b, 5c übergeben. Von dort werden die verschlüsselten Daten an das Verschlüsselungsmodul 8a, 8b, 8c des adressierten Nachrichtenpfads 5a, 5b, 5c weitergegeben, wobei die geräteinternen Adressierungsverfahren verwendet werden. Das Verschlüsselungsmodul 8a, 8b, 8c des Nachrichtenpfads 5a, 5b, 5c, welcher die für ihn bestimmten Daten empfängt, überprüft die Markierungen und entschlüsselt den Datenstrom 2 und übergibt diesen an den ersten Datenverarbeitungsbereich 4a dieses Nachrichtenpfads 5a, 5b, 5c, wo er gemäß des Funkverfahrens des Empfänger-Nachrichtenpfads 5a, 5b, 5c weiterverarbeitet wird. Z.B. erfolgt eine Ausgabe an der Benutzerschnittstelle 14 oder eine Versendung über die Antenne 15 etc.

Ferner ist in der erfindungsgemäßen Vorrichtung 1 eine selektive Verteilung des Datenstroms 2 anhand unterschiedlicher Domänen bei einer Adressierung und/oder unterschiedlicher Klassifikation im Hinblick auf Vertraulichkeit bzw. Sensitivität vorgesehen. Wobei Domänen unterschiedliche Verwaltungseinheiten innerhalb eines Unternehmens sein können und eine unterschiedliche Klassifikation der Daten sich darauf bezieht, wie sicher die angewandte Verschlüsselungsmethode sein muss, d.h. wie vertraulich die Daten für die absendende Domäne bzw. für die Empfänger-Domäne sein soll.

Im ersten Datenverarbeitungsbereich 4a werden die vertraulichen bzw. sensitiven Daten verarbeitet, wobei die Art der Datenverarbeitung vom Typ der durch den Benutzer anfallenden Daten und vom Funkverfahren im öffentlich zugänglichen Bereich abhängt.

Die Verschaltungseinheit ermöglicht einen generellen Datenaustausch, welcher den implementierten Prüfregeln unterworfen ist, wobei diese Prüfregeln auch auf den eingespeicherten Schlüssel zugreifen.

In jedem Verschlüsselungsmodul 8a, 8b, 8c sind Prüfregeln für einen Datenaustausch zwischen den verschiedenen Nachrichtenpfaden 5a, 5b, 5c des ersten Datenverarbeitungsbereichs 4a vorgesehen. Die Verschaltungseinheit im zweiten Datenverarbeitungsbereich 4b ist mit einer Konfigurationseinheit 10 verbunden, so dass die Prüfregeln über diese selektiv in den Verschlüsselungsmodulen 8a, 8b, 8c von außen konfigurierbar sind. Ferner ist in jedem Verschlüsselungsmodul 8a, 8b, 8c zumindest ein von außen einspeicherbarer Schlüssel abgelegt, wobei der Schlüssel beispielsweise mittels eines USB-Steckers 11, welcher mit der Konfigurationseinheit 10 verbindbar ist, einspeicherbar ist.

Die erfindungsgemäße Vorrichtung 1 sieht vor, dass die verschiedenen Nachrichtenpfade 5a, 5b, 5c innerhalb einer Kommunikationseinheit 3 unterschiedliche und/oder gleiche Kommunikationsstandards, wie beispielsweise UMTS, GSM oder TETRA, erfüllen. Dabei ist die Kommunikationseinheit 3 ein Funkgerät, insbesondere ein Funkgerät auf Software-Basis (SDR), so dass die verschiedenen Funkstandards benutzerdefiniert in die Kommunikationseinheit 3 der erfindungsgemäßen Vorrichtung 1 geladen werden können.

Jeder Nachrichtenpfad 5a, 5b, 5c weist an einem ersten Ende 12 eine Antenne 15 und an einem zweiten Ende 13 eine Benutzerschnittstelle 14 auf. Dabei kann die Benutzerschnittstelle 14 eine Mensch-Maschine-Schnittstelle oder eine Schnittstelle zu einem weiteren Kommunikationsgerät sein.

Die erfindungsgemäße Vorrichtung 1 kann für eine Teilmenge der Nachrichtenpfade 5a, 5b, 5c einen bidirektionalen Betrieb und für eine weitere Teilmenge einen undirektionaler Betrieb aufweisen.

Das erfindungsgemäße Verfahren verarbeitet in einer Kommunikationseinheit 3 Datenströme 2 in zwei voneinander getrennten Datenverarbeitungsbereichen 4a, 4b. Dabei werden die Datenströme 2 in zumindest zwei getrennten Nachrichtenpfaden 5a, 5b, 5c zwischen jeweils einem Nachrichtensender 6 und jeweils einem Nachrichtenempfänger 7 transportiert und von jeweils einem Verschlüsselungsmodul 8a, 8b, 8c in dem entsprechenden Nachrichtenpfad 5a, 5b, 5c verschlüsselt bzw. entschlüsselt. Jedes Verschlüsselungsmodul 8a, 8b, 8c ist dabei mit einer Verschaltungseinheit verbunden, welche bestimmte Nachrichten des sensitiven Datenstroms 2 sowie des nicht-sensitiven Datenstroms 2 gezielt auf verschiedene Nachrichtenpfade 5a, 5b, 5c verteilt.

In jedem Verschlüsselungsmodul 8a, 8b, 8c werden dazu Prüfregeln für einen konfigurierbaren Datenaustausch zwischen den verschiedenen Nachrichtenpfaden 5a, 5b, 5c eines ersten Datenverarbeitungsbereichs 4a implementiert. Des Weiteren werden in jedem Verschlüsselungsmodul 8a, 8b, 8c Prüfregeln für einen konfigurierbaren Datenaustausch zwischen dem erstem Datenverarbeitungsbereich 4a und mindestens einem Nachrichtenpfad 5a, 5b, 5c eines zweiten Datenverarbeitungsbereichs 4b implementiert.

Das erfindungsgemäße Verfahren beinhaltet, dass die Prüfregeln im Fehlerfall einen Datenabfluss vom ersten Datenverarbeitungsbereich 4a verhindern, wobei die Prüfregeln eingehende und/oder ausgehende Kommunikation zwischen den Nachrichtenpfaden 5a, 5b, 5c bzw. Nachrichten, die an den ersten Datenverarbeitungsbereich 4a gerichtet sind, selbstständig bzw. automatisch prüfen. Dabei unterscheidet das erfindungsgemäße Verfahren Datenströme 2 anhand eines Vertraulichkeitsgrads mittels der implementierten Prüfregeln.

Die Erfindung ist nicht auf das in der Zeichnung dargestellte Ausführungsbeispiel, insbesondere nicht auf eine Anwendung in Funknetzen, beschränkt, sondern auch in anderen Kommunikationsnetzen wie beispielsweise in IPbasierten Kommunikationsnetzen anwendbar. Alle vorstehend beschriebenen und in der Zeichnung dargestellten Merkmale sind beliebig miteinander kombinierbar.

## Patentansprüche

1. Vorrichtung (1) zur Verarbeitung von Datenströmen (2) in einer Kommunikationseinheit (3) mit zwei voneinander getrennten Datenverarbeitungsbereichen (4a, 4b), die zumindest zwei getrennte Nachrichtenpfade (5a, 5b, 5c) aufweisen, die jeweils mit einem Nachrichtensender (6) und jeweils mit einem Nachrichtenempfänger (7) verbunden sind, wobei in jedem Nachrichtenpfad (5a, 5b, 5c) jeweils ein Verschlüsselungsmodul (8a, 8b, 8c) vorgesehen ist, welches sowohl mit einem ersten Datenverarbeitungsbereich (4a) als auch mit einem zweiten Datenverarbeitungsbereich (4b) verbunden ist und
wobei eine Verschaltungseinheit vorgesehen ist, welche mit den Nachrichtenpfaden (5a, 5b, 5c) des zweiten Datenverarbeitungsbereichs (4b) sowie mit allen Verschlüsselungsmodulen (8a, 8b, 8c) der entsprechenden Nachrichtenpfade (5a, 5b, 5c) zur gezielten Verteilung von bestimmten Nachrichten verbunden ist,
**dadurch gekennzeichnet,**
**dass** in jedem Verschlüsselungsmodul (8a, 8b, 8c) Prüfregeln für einen Datenaustausch zwischen den verschiedenen Nachrichtenpfaden (5a, 5b, 5c) des ersten Datenverarbeitungsbereichs (4a) vorgesehen sind.

2. Vorrichtung nach Anspruch 1,
**dadurch gekennzeichnet,**
**dass** der erste Datenverarbeitungsbereich (4a) für eine Verarbeitung von sensitiven Daten vorgesehen ist und dass der zweite Datenverarbeitungsbereich (4b) für eine Verarbeitung von nicht-sensitiven Daten vorgesehen ist.

3. Vorrichtung nach einem der Ansprüche 1 bis 2,
**dadurch gekennzeichnet,**
**dass** in einem Relaisbetrieb eine selektive Verteilung des Datenstroms (2) auf die verschiedenen Nachrichtenpfade (5a, 5b, 5c) vorgesehen ist.

4. Vorrichtung nach Anspruch 3,
**dadurch gekennzeichnet,**
**dass** die selektive Verteilung des Datenstroms (2) anhand unterschiedlicher Domänen bei einer Adressierung und/oder unterschiedlicher Klassifikation im Hinblick auf Vertraulichkeit vorgesehen ist.

5. Vorrichtung nach einem der Ansprüche 1 bis 4,
**dadurch gekennzeichnet,**
**dass** in jedem Verschlüsselungsmodul (8a, 8b, 8c) Prüfregeln für einen konfigurierbaren Datenaustausch zwischen dem ersten Datenverarbeitungsbereich (4a) und dem zweiten Datenverarbeitungsbereich (4b) eines Nachrichtenpfades (5a, 5b, 5c) vorgesehen sind.

6. Vorrichtung nach Anspruch 5,
**dadurch gekennzeichnet,**
**dass** die Prüfregeln Adresslisten und/oder sonstige Vertraulichkeitstabellen sind.

7. Vorrichtung nach einem der Ansprüche 1 bis 6,
**dadurch gekennzeichnet,**
**dass** im Fehlerfall ein Datenabfluss von dem ersten Datenverarbeitungsbereich (4a) verhindert ist.

8. Vorrichtung nach einem der Ansprüche 1 bis 7,
**dadurch gekennzeichnet,**
**dass** eine selbstständige Prüfung der eingehenden und/oder ausgehenden Kommunikation zwischen den
Nachrichtenpfaden (5a, 5b, 5c) in den Verschlüsselungsmodulen (8a, 8b, 8c) vorgesehen ist.

9. Vorrichtung nach einem der Ansprüche 1 bis 8,
**dadurch gekennzeichnet,**
**dass** eine Unterscheidung der Datenströme (2) anhand eines Vertraulichkeitsgrads vorgesehen ist.

10. Vorrichtung nach einem der Ansprüche 1 bis 9,
**dadurch gekennzeichnet,**
**dass** die Verschaltungseinheit mit einer Konfigurationseinheit (10) verbunden ist.

11. Vorrichtung nach Anspruch 5 oder 6,
**dadurch gekennzeichnet,**
**dass** die Prüfregeln selektiv in den Verschlüsselungsmodulen (8a, 8b, 8c) konfigurierbar sind.

12. Vorrichtung nach einem der Ansprüche 1 bis 11,
**dadurch gekennzeichnet,**
**dass** in jedem Verschlüsselungsmodul (8a, 8b, 8c) zumindest ein von außen einspeicherbarer Schlüssel abgelegt ist.

13. Vorrichtung nach Anspruch 12,
**dadurch gekennzeichnet,**
**dass** der Schlüssel mittels eines Speicher-Elements, insbesondere eines USB-Steckers (11), welcher mit der Konfigurationseinheit (10) verbunden ist, einspeicherbar ist.

14. Vorrichtung nach einem der Ansprüche 1 bis 13,
**dadurch gekennzeichnet,**
**dass** die verschiedenen Nachrichtenpfade (5a, 5b, 5c) unterschiedliche und/oder gleiche Kommunikationsstandards erfüllen.

15. Vorrichtung nach einem der Ansprüche 1 bis 14,
**dadurch gekennzeichnet,**
**dass** die Kommunikationseinheit (3) ein Funkgerät, insbesondere ein Funkgerät auf Software Basis ist.

16. Vorrichtung nach einem der Ansprüche 1 bis 15,
**dadurch gekennzeichnet,**
**dass** jeder Nachrichtenpfad (5a, 5b, 5c) an einem ersten Ende (12) mit einer Antenne (15) und an einem zweiten Ende (13) mit einer Benutzerschnittstelle (14) verbunden ist.

17. Vorrichtung nach einem der Ansprüche 1 bis 16,
**dadurch gekennzeichnet,**
**dass** zumindest für eine Teilmenge der Nachrichtenpfade (5a, 5b, 5c) ein bidirektionaler Betrieb vorgesehen ist.

18. Verfahren zur Verarbeitung von Datenströmen (2) in einer Kommunikationseinheit (3), wobei die Datenströme (2) in zwei getrennten Datenverarbeitungsbereichen (4a, 4b) verarbeitet werden,
und wobei die Datenströme (2) in zumindest zwei getrennten Nachrichtenpfaden (5a, 5b, 5c) zwischen jeweils einem Nachrichtensender (6) und jeweils einem Nachrichtenempfänger (7) transportiert werden und von jeweils einem Verschlüsselungsmodul (8a, 8b, 8c) in dem entsprechenden Nachrichtenpfad (5a, 5b, 5c) verschlüsselt bzw. entschlüsselt werden,
und wobei jedes Verschlüsselungsmodul (8a, 8b, 8c) mit einer Verschaltungseinheit verbunden wird, welche bestimmte Nachrichten innerhalb eines ersten Datenverarbeitungsbereichs (4a) sowie bestimmte Nachrichten innerhalb eines zweiten Datenverarbeitungsbereichs (4b) gezielt auf verschiedene Nachrichtenpfade (5a, 5b, 5c) verteilt,
**dadurch gekennzeichnet,**
**dass** in jedem Verschlüsselungsmodul (8a, 8b, 8c) Prüfregeln für einen konfigurierbaren Datenaustausch zwischen den verschiedenen Nachrichtenpfaden (5a, 5b, 5c) des ersten Datenverarbeitungsbereichs (4a) implementiert werden.

19. Verfahren nach Anspruch 18,
**dadurch gekennzeichnet,**
**dass** im ersten Datenverarbeitungsbereich (4a) sensitive Daten verarbeitet werden und dass im zweiten Datenverarbeitungsbereich (4b) nicht-sensitive Daten verarbeitet werden.

20. Verfahren nach Anspruch 19,
**dadurch gekennzeichnet,**
**dass** der Datenstrom (2) in einem Relaisbetrieb selektiv auf die verschiedenen Nachrichtenpfade (5a, 5b, 5c) verteilt wird.

21. Verfahren nach einem der Ansprüche 18 bis 20,
**dadurch gekennzeichnet,**
**dass** der Datenstrom (2) anhand unterschiedlicher Domänen bei einer Adressierung und/oder unterschiedlicher Klassifikation im Hinblick auf Vertraulichkeit verteilt wird.

22. Verfahren nach Anspruch 18,
**dadurch gekennzeichnet,**
**dass** als Prüfregeln Adresslisten und/oder Vertraulichkeitstabellen verwendet werden.

23. Verfahren nach Anspruch 18 oder 22,
**dadurch gekennzeichnet,**
**dass** in jedem Verschlüsselungsmodul (8a, 8b, 8c) Prüfregeln für einen konfigurierbaren Datenaustausch zwischen dem ersten Datenverarbeitungsbereich (4a) und dem zweiten Datenverarbeitungsbereich (4b) eines Nachrichtenpfades (5a, 5b, 5c) implementiert werden.

24. Verfahren nach einem der Ansprüche 18 bis 23,
**dadurch gekennzeichnet,**
**dass** die Prüfregeln im Fehlerfall einen Datenabfluss von dem ersten Datenverarbeitungsbereich (4a) verhindern.

25. Verfahren nach einem der Ansprüche 18 bis 24,
**dadurch gekennzeichnet,**
**dass** mit den Prüfregeln eingehende und/oder ausgehende Kommunikation zwischen den Nachrichtenpfaden (5a, 5b, 5c) selbstständig geprüft werden/wird.

26. Verfahren nach einem der Ansprüche 18 bis 25,
**dadurch gekennzeichnet,**
**dass** die Prüfregeln Datenströme (2) anhand eines Vertraulichkeitsgrads unterscheiden.

27. Verfahren nach einem der Ansprüche 18 bis 26,
**dadurch gekennzeichnet,**
**dass** an die Verschaltungseinheit eine Konfigurationseinheit (10) angeschlossen wird.

28. Verfahren nach einem der Ansprüche 18 bis 27,
**dadurch gekennzeichnet,**
**dass** die Prüfregeln selektiv in den Verschlüsselungsmodulen (8a, 8b, 8c) konfiguriert werden.

29. Verfahren nach Anspruch 28,
**dadurch gekennzeichnet,**
**dass** mittels eines Speicherelements, insbesondere eines USB-Steckers (11), in jedes Verschlüsselungsmodul (8a, 8b, 8c) von außen über die Konfigurationseinheit (10) zumindest ein Schlüssel eingespeichert wird.

30. Verfahren nach einem der Ansprüche 18 bis 29,
**dadurch gekennzeichnet,**
**dass** zumindest eine Teilmenge der Nachrichtenpfade (5a, 5b, 5c) bidirektional betrieben wird.

## Claims

1. Device (1) for processing datastreams (2) in a communications unit (3) with two mutually-separate data-processing regions (4a, 4b), which comprise at least two separate message paths (5a, 5b, 5c), which are connected respectively to a message transmitter (6) and respectively to a message receiver (7),
wherein, in each message path (5a, 5b, 5c), an encoding module (8a, 8b, 8c) is provided, which is connected both to a first data-processing region (4a) and also to a second data-processing region (4b), and
wherein a distribution unit is provided, which is connected to the message paths (5a, 5b, 5c) of the second data-processing region (4b) and to all encoding modules (8a, 8b, 8c) of the corresponding message paths (5a, 5b, 5c) for the targeted distribution of given messages,
**characterised in that,**
test rules for a data exchange between the various message paths (5a, 5b, 5c) of the first data-processing region (4a) are provided in each encoding module (8a, 8b, 8c).

2. Device according to claim 1,
**characterised in that,**
the first data-processing region (4a) is provided for a processing of sensitive data, and that the second data-processing region (4b) is provided for a processing of non-sensitive data.

3. Device according to any one of claims 1 to 2, **characterised in that,**
in a relay operating mode, a selective distribution of the datastream (2) to the various message paths (5a, 5b, 5c) is provided.

4. Device according to claim 3,
**characterised in that,**
the selective distribution of the datastream (2) is provided on the basis of different domains with an addressing and/or different classification with regard to confidentiality.

5. Device according to any one of claims 1 to 4,
**characterised in that,**
test rules for a configurable data exchange between the first data-processing region (4a) and the second data-processing region (4b) of a message path (5a, 5b, 5c) are provided in each encoding module (8a, 8b, 8c).

6. Device according to claim 5,
**characterised in that,**
the test rules are address lists and/or other confidentiality tables.

7. Device according to any one of claims 1 to 6,
**characterised in that,**
in the case of an error, a data leakage from the first data-processing region (4a) is prevented.

8. Device according to any one of claims 1 to 7,
**characterised in that,**
an automatic testing of the incoming and/or outgoing communication between the message paths (5a, 5b, 5c) is provided in the encoding modules (8a, 8b, 8c).

9. Device according to any one of claims 1 to 8,
**characterised in that,**
a differentiation of the datastreams (2) on the basis of a degree of confidentiality is provided.

10. Device according to any one of claims 1 to 9,
**characterised in that,**
the distribution unit is connected to a configuration unit (10).

11. Device according to claim 5 or 6,
**characterised in that,**
the test rules are selectively configurable in the encoding modules (8a, 8b, 8c).

12. Device according to any one of claims 1 to 11,
**characterised in that,**
at least one key capable of being read in from externally is stored in each encoding module (8a, 8b, 8c).

13. Device according to claim 12,
**characterised in that,**
the key can be read in by means of a memory element, in particular, a USB plug (11), which is connected to the configuration unit (10).

14. Device according to any one of claims 1 to 13,
**characterised in that,**
the various message paths (5a, 5b, 5c) meet different and/or the same communications standards.

15. Device according to any one of claims 1 to 14,
**characterised in that,**
the communications unit (3) is a radio device, in particular, a software-defined radio device.

16. Device according to any one of claims 1 to 15,
**characterised in that,**
each message path (5a, 5b, 5c) is connected at a first end (12) to an antenna (15) and at a second end (13) to a user interface (14).

17. Device according to any one of claims 1 to 16,
**characterised in that,**
a bi-directional operating mode is provided at least for a subset of the message paths (5a, 5b, 5c).

18. Method for processing datastreams (2) in a communications unit (3), wherein the datastreams (2) are processed in two separate data-processing regions (4a, 4b),
and wherein the datastreams (2)
are transported in at least two separate message paths (5a, 5b, 5c) between respectively a message transmitter (6) and respectively a message receiver (7) and are encoded or decoded in each case by an encoding module (8a, 8b, 8c) in the corresponding message path (5a, 5b, 5c),
and wherein each encoding module (8a, 8b, 8c) is connected to a distribution unit, which distributes given messages within a first data-processing region (4a) and given messages within a second data-processing region (4b) in a targeted manner to various message paths (5a, 5b, 5c),
**characterised in that,**
test rules for a configurable data exchange between the various message paths (5a, 5b, 5c) of the first
data-processing region (4a) are implemented in each encoding module (8a, 8b, 8c).

19. Method according to claim 18,
**characterised in that,**
sensitive data are processed in the first data-processing region (4a), and that non-sensitive data are processed in the second data-processing region (4b).

20. Method according to claim 19,
**characterised in that,**
in a relay operating mode, the datastream (2) is selectively distributed to the various message paths (5a, 5b, 5c).

21. Method according to any one of claims 18 to 20,
**characterised in that,**
the datastream (2) is distributed on the basis of different domains with an addressing and/or different classification with regard to confidentiality.

22. Method according to claim 18,
**characterised in that,**
address lists and/or confidentiality tables are used as test rules.

23. Method according to claim 18 or 22,
**characterised in that,**
test rules for a configurable data exchange between the first data-processing region (4a) and the second data-processing region (4b) of a message path (5a, 5b, 5c) are implemented in every encoding module (8a, 8b, 8c).

24. Method according to any one of claims 18 to 23,
**characterised in that,**
in the case of an error, the test rules prevent a data leakage from the first data-processing region (4a).

25. Method according to any one of claims 18 to 24,
**characterised in that,**
with the test rules, incoming and/or outgoing communication between the message paths (5a, 5b, 5c) is/are automatically tested.

26. Method according to any one of claims 18 to 25,
**characterised in that,**
the test rules distinguish datastreams (2) on the basis of a degree of confidentiality.

27. Method according to any one of claims 18 to 26,
**characterised in that,**
a configuration unit (10) is connected to the distribution unit.

28. Method according to any one of claims 18 to 27,
**characterised in that,**
the test rules are configured selectively in the encoding modules (8a, 8b, 8c).

29. Method according to claim 28,
**characterised in that,**
by means of a memory element, in particular a USB plug (11), at least one key is read into every encoding module (8a, 8b, 8c) via the configuration unit (10) from externally.

30. Method according to any one of claims 18 to 29,
**characterised in that,**
at least one subset of the message paths (5a, 5b, 5c) is operated bi-directionally.

## Revendications

1. Dispositif (1) de traitement de flux de données (2) dans une unité de communication (3) comportant de zones de traitement de données séparées l'une de l'autre (4a, 4b), qui présentent au moins deux trajets de message distincts (5a, 5b, 5c), qui sont reliés respectivement à un émetteur du message (6) et respectivement à un récepteur du message (7),
dans lequel est prévu dans chaque trajet de message (5a, 5b, 5c) respectivement un module de cryptage (8a, 8b, 8c), qui est relié non seulement à une première zone de traitement de données (4a) mais également à une seconde zone de traitement de données (4b) et
dans lequel une unité de connexion est prévue, qui est reliée au trajet de message (5a, 5b, 5c) de la seconde zone de traitement de données (4b) ainsi qu'à tous les modules de cryptage (8a, 8b, 8c) des trajet de message correspondants (5a, 5b, 5c) en vue de la répartition ciblée des messages déterminés,
**caractérisé en ce que**
dans chaque module de cryptage (8a, 8b, 8c) sont prévues des règles de contrôle pour un échange de données entre les différents trajets de message (5a, 5b, 5c) de la première zone de traitement de données (4a).

2. Dispositif selon la revendication 1,
**caractérisé en ce que**
la première zone de traitement de données (4a) est prévue pour un traitement de données sensibles et **en ce que** la seconde zone de traitement de données (4b) est prévue pour un traitement de données non sensibles.

3. Dispositif selon l'une des revendications 1 à 2,
**caractérisé en ce que**
dans un fonctionnement du relais est prévue une répartition sélective du flux de données (2) sur les différents trajets de message (5a, 5b, 5c).

4. Dispositif selon la revendication 3,
**caractérisé en ce que**
la répartition sélective du flux de données (2) est prévue en regard de différents domaines lors d'un adressage et/ou d'une classification différente compte tenu de la confidentialité.

5. Dispositif selon l'une des revendications 1 à 4,
**caractérisé en ce que**
dans chaque module de cryptage (8a, 8b, 8c) sont prévues des règles de contrôle pour un échange de données pouvant être configuré entre la première zone de traitement de données (4a) et la seconde zone de traitement de données (4b) d'un trajet de message (5a, 5b, 5c).

6. Dispositif selon la revendication 5,
**caractérisé en ce que**
les règles de contrôle sont des listes d'adresses et/ou des tables de confidentialité particulières.

7. Dispositif selon l'une des revendications 1 à 6,
**caractérisé en ce que**
en cas de panne, un flux de données de la première zone de traitement de données (4a) est empêché.

8. Dispositif selon l'une des revendications 1 à 7,
**caractérisé en ce que**
un contrôle autonome de la communication entrante et/ou sortante entre les trajets de message (5a, 5b, 5c) est prévu dans les modules de cryptage (8a, 8b, 8c).

9. Dispositif selon l'une des revendications 1 à 8,
**caractérisé en ce que**
une distinction des flux de données (2) est prévue en regard d'un degré de confidentialité.

10. Dispositif selon l'une des revendications 1 à 9,
**caractérisé en ce que**
une unité de connexion est reliée à une unité de configuration (10).

11. Dispositif selon la revendication 5 ou 6,
**caractérisé en ce que**
les règles de contrôle peuvent être configurées sélectivement dans les modules de cryptage (8a, 8b, 8c).

12. Dispositif selon l'une des revendications 1 à 11,
**caractérisé en ce que**
dans chaque module de cryptage (8a, 8b, 8c) est stockée au moins une clé pouvant être entrée depuis l'extérieur.

13. Dispositif selon la revendication 12,
**caractérisé en ce que**
la clé peut être entrée au moyen d'un élément de stockage, en particulier un connecteur USB (11), qui est relié à l'unité de configuration (10).

14. Dispositif selon l'une des revendications 1 à 13,
**caractérisé en ce que**
les différents trajets de message (5a, 5b, 5c) remplissent des standards de communication différents et/ou similaires.

15. Dispositif selon l'une des revendications 1 à 14,
**caractérisé en ce que**
l'unité de communication (3) est un appareil radio, en particulier un appareil radio sur une base logicielle.

16. Dispositif selon l'une des revendications 1 à 15,
**caractérisé en ce que**
chaque trajet de message (5a, 5b, 5c) est relié à une première extrémité (12) à une antenne (15) et à une seconde extrémité (13) à une interface utilisateur (14).

17. Dispositif selon l'une des revendications 1 à 16,
**caractérisé en ce que**
une fonction bidirectionnelle est prévue au moins pour une partie des trajets de message (5a, 5b, 5c).

18. Procédé de traitement de flux de données (2) dans une unité de communication (3), dans lequel les flux de données (2) sont traités dans de zones de traitement de données séparées (4a, 4b),
et dans lequel les flux de données (2) sont transportés dans au moins deux trajet de message séparés (5a, 5b, 5c) entre un émetteur du message respectif (6) et un récepteur du message respectif (7) et sont cryptés ou décryptés par un module de cryptage (8a, 8b, 8c) dans le trajet de message correspondant (5a, 5b, 5c),
et dans lequel chaque module de cryptage (8a, 8b, 8c) est relié à une unité de connexion, qui répartit les messages déterminés à l'intérieur d'une première zone de traitement de données (4a) ainsi que les messages sélectionnés à l'intérieur d'une seconde zone de traitement de données (4b) de manière ciblée sur différents trajets de message (5a, 5b, 5c),
**caractérisé en ce que**
dans chaque module de cryptage (8a, 8b, 8c) sont mises en place des règles de contrôle pour un échange de données pouvant être configuré entre les différents trajets de message (5a, 5b, 5c) de la première zone de traitement de données (4a).

19. Procédé selon la revendication 18,
**caractérisé en ce que**
des données sensibles sont traitées dans la première zone de traitement de données (4a) et **en ce que** des données non sensibles sont traitées dans la seconde zone de traitement de données (4b).

20. Procédé selon la revendication 19,
**caractérisé en ce que**
le flux de données (2) est séparé sélectivement sur les différents trajets de message (5a, 5b, 5c) dans un fonctionnement du relais.

21. Procédé selon l'une des revendications 18 à 20,
**caractérisé en ce que**
le flux de données (2) est séparé en regard de différents domaines lors d'un adressage et/ou d'une classification différente compte tenu de la confidentialité.

22. Procédé selon la revendication 18,
**caractérisé en ce que**
des listes d'adresses et/ou des tables de confidentialité sont utilisées en tant que règles de contrôle.

23. Procédé selon la revendication 18 ou 22,
**caractérisé en ce que**
dans chaque module de cryptage (8a, 8b, 8c) sont mises en place des règles de contrôle pour un échange de données pouvant être configuré entre la première zone de traitement de données (4a) et la seconde zone de traitement de données (4b) d'un trajet de message (5a, 5b, 5c).

24. Procédé selon l'une des revendications 18 à 23,
**caractérisé en ce que**
les règles de contrôle empêchent un flux de données de la première zone de traitement de données (4a) en cas de panne.

25. Procédé selon l'une des revendications 18 à 24,
**caractérisé en ce que**
une(des) communication(s) entrante(s) et/ou sortante(s) entre les trajets de message (5a, 5b, 5c) est(sont) vérifiée(s) de façon autonome avec les règles de contrôle.

26. Procédé selon l'une des revendications 18 à 25,
**caractérisé en ce que**
les règles de contrôle différencient les flux de données (2) en regard d'un degré de confidentialité.

27. Procédé selon l'une des revendications 18 à 26,
**caractérisé en ce que**
une unité de configuration (10) est reliée à l'unité de connexion.

28. Procédé selon l'une des revendications 18 à 27,
**caractérisé en ce que**
les règles de contrôle sont configurées de manière sélective dans des modules de cryptage (8a, 8b, 8c).

29. Procédé selon la revendication 28,
**caractérisé en ce que**
au moins une clé est entrée au moyen d'un élément de stockage, en particulier un connecteur USB (11), dans chaque module de cryptage (8a, 8b, 8c) depuis l'extérieur par l'intermédiaire de l'unité de configuration (10).

30. Procédé selon l'une des revendications 18 à 29,
**caractérisé en ce que**
au moins une partie des trajets de message (5a, 5b, 5c) fonctionne bidirectionnellement.
